(19) Europäisches Patentamt / European Patent Office / Office européen des brevets

(11) **EP 2 704 310 B1**

(12) **EUROPEAN PATENT SPECIFICATION**

(45) Date of publication and mention
of the grant of the patent:
**13.02.2019  Bulletin 2019/07**

(51) Int Cl.:
*H02P 9/08* *(2006.01)*      *H02P 9/10* *(2006.01)*

(21) Application number: **12181949.4**

(22) Date of filing: **28.08.2012**

(54) **Method for operating such an electrical machine**

Verfahren zum Betrieb einer solchen elektrischen Maschine

Procédé pour le fonctionnement d'une telle machine électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.03.2014  Bulletin 2014/10**

(73) Proprietor: **GE Renewable Technologies
38100 Grenoble (FR)**

(72) Inventors:
- **Schwery, Alexander
  5024 Küttigen (CH)**
- **Traxler-Samek, Georg
  5703 Seon (CH)**

(74) Representative: **General Electric Technology
GmbH
Global Patent Operation - Europe
Brown Boveri Strasse 7
5400 Baden (CH)**

(56) References cited:
**EP-A1- 1 289 118      US-A1- 2007 194 572**

- DELALOYE C ET AL: "Estimation of Field Current in Vector-Controlled Synchronous Machine Variable-Speed Drives Employing Brushless Asynchronous Exciters", IEEE TRANSACTIONS ON INDUSTRY APPLICATIONS, IEEE SERVICE CENTER, PISCATAWAY, NJ, US, vol. 41, no. 3, 1 May 2005 (2005-05-01), pages 834-840, XP011132528, ISSN: 0093-9994, DOI: 10.1109/TIA.2005.847290

**Description**

TECHNICAL FIELD

The present disclosure relates to a method to control/regulate an electrical machine.

For example, the electrical machine is a rotating electrical machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines. In the following particular reference to electrical generators is made.

BACKGROUND

Electrical machines such as electrical generators (typically electrical generators are synchronous machines, in the following it is referred to as main electrical machine) have a rotor with a rotor winding that is supplied with electric power, and a stator with a stator winding to collect electric power to be supplied to a supply network.

In order to supply electric power to the rotor winding, different excitation systems can be provided.

A first excitation system is the so called static excitation system; it includes a static rectifier connected at one side to the supply network to receive AC electric power, and at the other side to slip rings, to transfer DC electric power to the rotor windings.

A disadvantage of the static excitation systems is that during operation, the slip rings and brushes connected thereto undergo wear that cause carbon dust generation.

A different excitation system is the so-called brushless excitation system. The brushless excitation systems include an excitation rotor, with a three-phase or multi-phase excitation rotor winding and an excitation stator having a DC excitation stator winding.

During operation an AC voltage is induced in the excitation rotor winding by the excitation stator winding; this is then rectified (to be provided to the rotor of the main electrical machine) by means of diodes, which rotate with the rotor.

EP 1 289 118 A1 discloses a brushless excitation system; in particular, it discloses an excitation system with an AC excitation rotor winding connected to a rotating rectifier (that is in turn connected to the rotor of the main electrical machine) and an excitation stator with a DC excitation stator winding.

These machines have the disadvantage that they cannot provide excitation at start up (i.e. when the excitation rotor is at stand still). Consequently, braking can not be applied at lower speed.

The patent application publication US20070194572A1 discloses a multi-phase electric machine rotationally connected to an exciter having multi-phase stator and rotor windings.

SUMMARY OF THE INVENTION

It is an object of the disclosure to indicate a method for an electric machine, which avoids the disadvantages of known methods.

It is another object of the disclosure to indicate a method that dispenses with the use of slip rings.

This and other objects are achieved by a method according to claim 1.

The electrical machine comprises a first rotor with a first rotor winding and a first stator with a first stator winding, and an excitation device for supplying current to the first rotor winding. The excitation device has a second rotor with a second rotor winding, the second rotor being connected to the first rotor in a fixed rotational relationship, and a second stator with a second stator winding.

The electrical machine is characterized in that the second rotor winding and the second stator winding are multi-phase windings, and the first and second rotor windings are connected to one another.

In a first refinement all phases of the first and second rotor windings are connected to one another by phase-connecting conductors.

In another refinement, the first and second rotor windings are arranged on a common rotor shaft.

In a further refinement, the phase-connecting conductors run within the rotor shaft.

In an even further refinement, the excitation device defines an asynchronous electrical machine.

In another refinement, the first rotor winding is a multi-phase winding, and the first and second rotor windings are connected directly to one another (i.e. without other components such as rectifiers interposed).

According to the method for operating an electrical machine, in order to control/regulate the machine, the rotor currents through the first rotor winding are determined based on the stator currents through the second stator winding of the excitation device.

In a first refinement of the method, the speed of the rotor is measured and the rotor currents through the first rotor winding are determined from the measured speed and an equivalent circuit diagram of the excitation device.

In another refinement, a machine model of the excitation device is used to determine the rotor currents through the first rotor winding, such that the rotor currents through the first rotor winding are computed based on the measured currents of the excitation device.

In a further refinement, the determination of the rotor currents through the first rotor winding is carried out by means of a multi-stage cascade control, wherein the magnetization and the torque of the machine are controlled by means of the stator currents through the first stator winding, which for their part are controlled by the rotor currents through the first rotor winding, which in turn are themselves controlled by impressing the stator-side currents through the second stator winding of the excitation device.

BRIEF DESCRIPTION OF THE FIGURES

The invention is explained in more detail below with reference to exemplary embodiments in conjunction with the drawing. In the drawing

Fig. 1    shows, in a greatly simplified representation, an asynchronous machine according to an exemplary embodiment of the invention;

Fig. 2    shows an electrical machine connected to a supply network; and

Fig. 3    shows a different electrical machine in a different embodiment of the invention.

WAYS OF IMPLEMENTING THE INVENTION

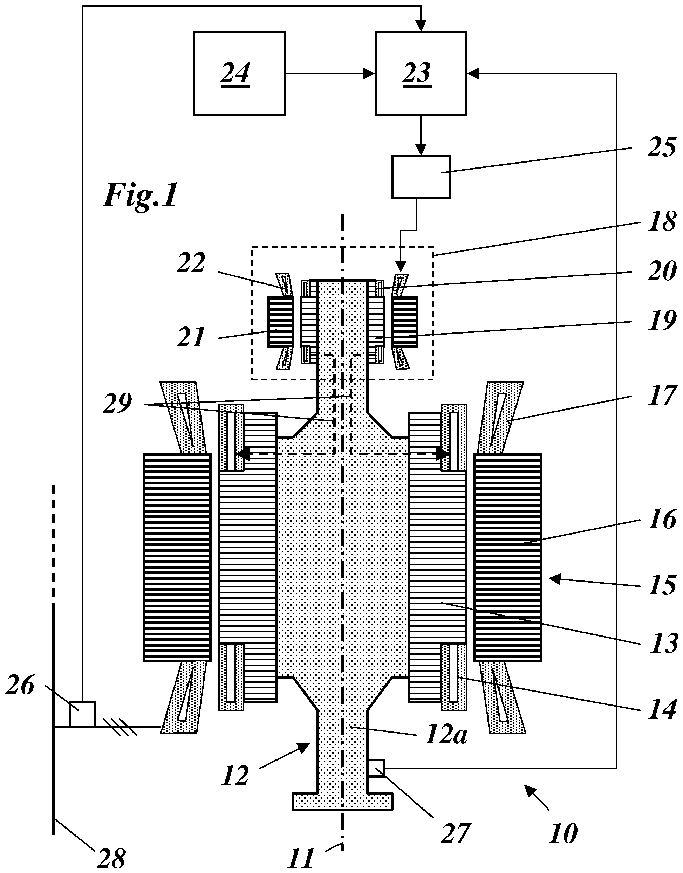

With reference to figure 1, a main electrical machine 10 is shown. The main electrical machine 10 is for example an asynchronous electrical machine such as an electrical generator of a variable-speed energy production in pumped storage plants and/or windmills.

The main electrical machine 10 comprises a rotor 12 having a rotor shaft 12a which rotates about a machine axis 11.

The rotor 12 has a first rotor core 13 (that can be a laminated or non laminated) with an associated first rotor winding 14.

The rotor core 13 is concentrically encompassed by a stator 15 having a first stator laminated core 16 with a first stator winding 17; the stator winding 17 is connected to a supply network 28.

This main electrical machine 10 is associated to an excitation device 18 that supplies the first rotor winding 14 with current.

The excitation device 18 comprises a second rotor core 19 (laminated or non laminated core) having an associated second rotor winding 20 which is concentrically encompassed by a second stator laminated core 21 that has a second stator winding 22.

The second rotor core 19 is connected to the first rotor core 13 in a fixed rotational relationship, for example the second rotor core 19 is arranged on the rotor shaft 12a (other solutions are anyhow possible).

The first and second rotor winding 14 and 20 are multi-phase windings and are directly connected to one another by means of phase-connecting conductors 29. Preferably the two windings 14, 20 are three-phase windings which can consist of one or more parallel circuits.

In this embodiment (the main electrical machine is an asynchronous electrical machine), no diodes for rectification are required between the windings 14 and 20.

All phases, which can carry relatively large currents, are connected together. As a bearing is generally situated between the main machine and the excitation device 18, this connection (phase-connecting conductors 29) is advantageously laid in the rotor shaft 12a (see the arrows in Fig. 1). This solution is distinguished by the inherent safety (with regard to overvoltages) and the relative simplicity on the rotating part of the machine.

With the solution according to the disclosure, the direct electrical and mechanical connection of the two winding 14 and 20 results in a closed circuit, which cannot be opened. As a result, it is virtually impossible for dangerous voltages to occur at the rotor 12. Furthermore, the rotor winding 14 of the main machine is no longer directly subjected to the very fast voltage changes which would occur at the output of a possible converter (PWM pattern). In contrast, in the old static excitation systems with slip rings, if the rotor circuit of the asynchronous machine with slip rings were opened for any reason, which could occur, for example, in the event of damage to the slip ring apparatus, this would lead to possibly harmful overvoltages in the rotor winding.

The control on the main electrical machine is carried out by controlling the current induced into the second rotor core 19 of the excitation device 18.

In the excitation device 18 of the present disclosure, when the second stator winding 22 is supplied with a current Is, the current Ir induced at the second rotor winding 20 (this is the current that is supplied to the first rotor winding 14) is:

$$Ir = Is \cdot f(w)$$

wherein:

Ir is the current induced at the second rotor winding 20,
Is is the current provided at the second stator winding 22,
w is the relative speed between the second stator core 21 and the second rotor core 19,
f(w) is a known function of w and the design of the machine.

In other words, the excitation device 18 can be looked upon as a rotating transformer, wherein the transformation ratio is dependent on speed.

When the speed of the second rotor core 19 varies (for example when starting or stopping the main electrical machine 10), the current supplied to the second stator winding 22 must be controlled to obtain the required current at the second rotor winding 20.

If the speed and the equivalent circuit diagram of the excitation device 18 are known, the rotor currents can be determined by calculation starting from the stator currents through the stator winding 22 of the excitation device 18.

For example, this can be done with a multi-stage cascade control.

According to Fig. 1, a controller/regulator 23, which receives information relating to the stator currents in the stator winding 17 via a current sensor 26, is provided for this purpose. Furthermore, the controller/regulator 23 receives the present speed of the machine from a rotational speed sensor 27 arranged on the rotor shaft 12a; alternatively any or all of this information (but preferably the stator currents in the stator winding 17) can be derived from a machine model.

The power supply 25 (e.g. a converter) of the stator winding 22 of the excitation device 18 is controlled by the controller/regulator 23.

The quality of the control of the rotor currents can be improved by the use of a mathematical machine model 24 (observer), as a measurement of these currents is not provided. Such a machine model 24 provides the controller/regulator 23 with the necessary relationships for determining the rotor currents in the rotor winding 14 of the main machine.

The operation of the electrical machine is substantially the following.

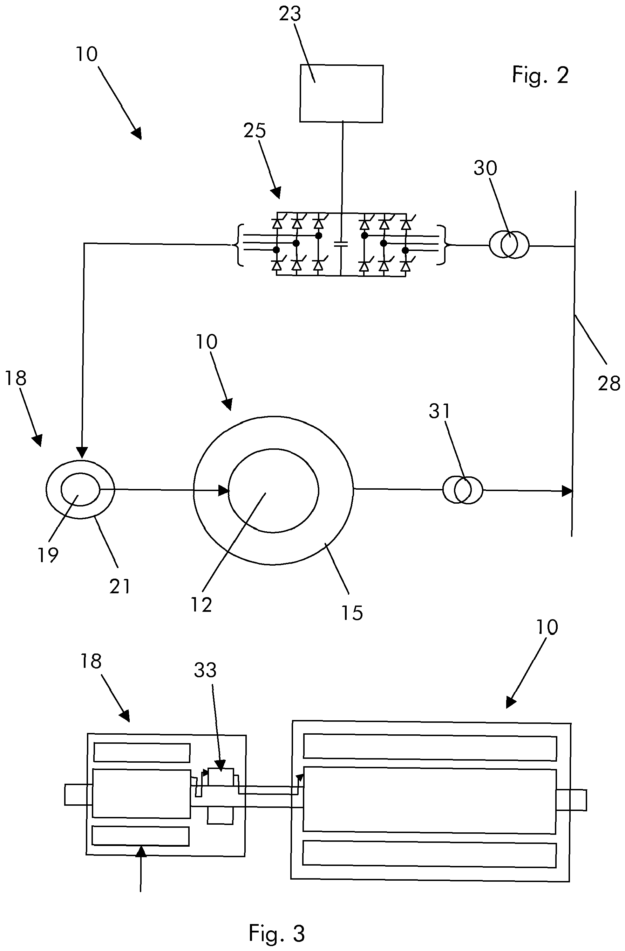

Figure 2 shows an example of a main electrical machine 10 connected to a supply network 28.

The supply network 28 is connected via a transformer 30 to the power supply 25 that is connected to the power regulator 23.

The power supply 25 is in turn connected to the second winding 22 of the second stator core 21 that can induce current into the second winding 20 of the second rotor core 19.

The second winding 20 is connected to the first winding 14 of the first rotor core 13 that in turn induces electric power into the first winding 17 of the first stator core 16. The first winding 17 is connected to the supply network 28 via a transformer 31.

During operation, the second winding 22 is supplied with the current Is that is determined on the basis of the desired current Ir at the second winding 20 (Ir is the same current that is supplied to the first winding 14) and second rotor core speed. The current Is is an AC current such as a three-phase current; it is clear that any number of phases for the current is possible. The current Is induces the current Ir into the rotor winding 19.

The current Ir is transmitted to the first rotor winding 14 via the phase-connecting conductors 29. From the first rotor winding 14 the current Ir induces electric power into the first stator winding 17.

When the speed of the rotor 12 changes, the current Is is changed accordingly to obtain the desired Ir; this can be done at start up, stop or during regulation of for example a wind or hydro turbine.

The rotor can also be provided with a rotating rectifier 33 in case at the first rotor core 13 DC electric power is needed (for example if the main electrical machine defines a synchronous machine).

Advantageously, the excitation device of the present disclosure can be used together with first rotor and stator that define an asynchronous machine, a synchronous machine or doubly-fed asynchronous machines (such as those used for the variable-speed production of energy in pumped storage plants and are also used in windmills). In addition, the excitation device of the disclosure can be used with fast rotating synchronous machines (turbo generators, hydro generators with a low number of poles, and similar machines) and low-speed machines (in this case the excitation device serves to transmit the power from the stator to the rotor only by non-contact means and can therefore be built correspondingly smaller).

Advantageously, the excitation device is also suitable for exciting the synchronous machine at standstill, which is not possible with conventional brushless excitation devices. This is important particularly when starting synchronous machines in motor mode.

LIST OF REFERENCES

| | |
|---|---|
| 10 | main electrical machine |
| 11 | Machine axis |
| 12 | Rotor |
| 12a | Rotor shaft |
| 13 | Rotor laminated core |
| 14 | Rotor winding |
| 15 | Stator |
| 16 | Stator laminated core |
| 17 | Stator winding |
| 18 | Asynchronous excitation machine |
| 19 | Rotor laminated core |
| 20 | Rotor winding |
| 21 | Stator laminated core |
| 22 | Stator winding |
| 23 | Controller/regulator |
| 24 | Machine model |
| 25 | Power supply |
| 26 | Current sensor |
| 27 | Rotational speed sensor |
| 28 | Supply network |
| 29 | Phase-connecting conductor |
| 30 | transformer |
| 31 | transformer |
| 33 | rotating rectifier |

**Claims**

1. A method to control/regulate an electrical machine (10), comprising:

   providing a first rotor core (13), with a first rotor winding (14),
   providing first stator core (16) with a first stator winding (17),
   providing an excitation device (18) for supplying current to the first rotor winding (14),

providing the excitation device with a second rotor core (19) with a second multi-phase rotor winding (20), connecting the second rotor core (19) to the first rotor core (13) by a fixed rotational relationship, providing a second stator core (21) with a second multi-phase stator winding (22), connecting the first and second rotor windings (14, 20) to one another, the excitation device (18) defines an asynchronous electrical machine, **characterized by** determining the rotor currents through the first rotor winding (14) based on the stator currents through the second stator winding (22) of the excitation device (18), measuring the speed of the rotor (12), and determining the rotor currents through the first rotor winding (14) from the measured speed and an equivalent circuit diagram of the excitation device (18).

2. A method as claimed in claim 1, **characterized in** connecting all phases of the first and second rotor windings (14, 20) to one another by phase-connecting conductors (29).

3. A method as claimed in claim 1, **characterized in** arranging the first and second rotor windings (14, 20) on a common rotor shaft (12a).

4. A method as claimed in claim 2 and 3, **characterized in that** the phase-connecting conductors (29) run within the rotor shaft (12a).

5. A method as claimed in claim 1, **characterized in** providing the first rotor winding (14) as a multi-phase winding, and connecting the first and second rotor windings (14, 20) directly to one another.

6. A method for operating an electrical machine as claimed in one of the claims 1-5, **characterized in** using a machine model (24) of the excitation device (18) to determine the rotor currents through the first rotor winding (14).

7. The method as claimed in claim 6, **characterized in that** the determination of the rotor currents through the first rotor winding (14) is carried out by means of a multi-stage cascade control, wherein the magnetization and the torque of the machine are controlled by means of the stator currents through the first stator winding (17), which for their part are controlled by the rotor currents through the first rotor winding (14), which in turn are themselves controlled by impressing the stator-side currents through the second stator winding (22) of the excitation device (18).

**Patentansprüche**

1. Verfahren zum Steuern/Regulieren einer elektrischen Maschine (10), umfassend:

   Bereitstellen eines ersten Rotorkerns (13) mit einer ersten Rotorwicklung (14),
   Bereitstellen eines ersten Statorkerns (16) mit einer ersten Statorwicklung (17),
   Bereitstellen einer Erregervorrichtung (18) zum Zuleiten von Strom zur ersten Rotorwicklung (14),
   Bereitstellen der Erregervorrichtung mit einem zweiten Rotorkern (19) mit einer zweiten Mehrphasenrotorwicklung (20), Verbinden des zweiten Rotorkerns (19) mit dem ersten Rotorkern (13) durch eine festgesetztes Drehverhältnis, Bereitstellen eines zweiten Statorkerns (21) mit einer zweiten Mehrphasenstatorwicklung (22), Verbinden der ersten und zweiten Rotorwicklungen (14, 20) miteinander, wobei die Erregervorrichtung (18) eine asynchrone elektrische Maschine definiert, **gekennzeichnet durch** Bestimmen der Rotorströme durch die erste Rotorwicklung (14), basierend auf den Statorströmen durch die zweite Statorwicklung (22) der Erregervorrichtung (18), Messen der Geschwindigkeit des Rotors (12), und Bestimmen der Rotorströme durch die erste Rotorwicklung (14) aus der gemessenen Geschwindigkeit und einem äquivalenten Schaltkreisdiagramm der Erregervorrichtung (18).

2. Verfahren nach Anspruch 1, **gekennzeichnet durch** Verbinden aller Phasen der ersten und zweiten Rotorwicklungen (14, 20) miteinander durch phasenverbindende Leiter (29).

3. Verfahren nach Anspruch 1, **gekennzeichnet durch** Anordnen der ersten und zweiten Rotorwicklungen (14, 20) auf einer gemeinsamen Rotorwelle (12a).

4. Verfahren nach Anspruch 2 und 3, **dadurch gekennzeichnet, dass** die phasenverbindenden Leiter (29) innerhalb der Rotorwelle (12a) laufen.

5. Verfahren nach Anspruch 1, **gekennzeichnet durch** Bereitstellen der ersten Rotorwicklung (14) als eine Mehrphasenwicklung, und Verbinden der ersten und zweiten Rotorwicklungen (14, 20) direkt miteinander.

6. Verfahren zum Betreiben einer elektrischen Maschine nach einem der Ansprüche 1-5, **gekennzeichnet durch** Verwenden eines Maschinenmodells (24) der Erregervorrichtung (18), um die Rotorströme durch die erste Rotorwicklung (14) zu bestimmen.

**7.** Verfahren nach Anspruch 6, **dadurch gekennzeichnet, dass** die Bestimmung der Rotorströme durch die erste Rotorwicklung (14) mittels einer Mehrstufenkaskadensteuerung ausgeführt wird, wobei die Magnetisierung und das Drehmoment der Maschine mittels der Statorströme durch die erste Statorwicklung (17) gesteuert werden, die ihrerseits durch die Rotorströme durch die erste Rotorwicklung (14) gesteuert werden, die wiederum selbst durch Einprägen der Statorseitenströme durch die zweite Statorwicklung (22) der Erregervorrichtung (18) gesteuert sind.

## Revendications

**1.** Procédé de commande/régulation d'une machine électrique (10), comprenant :

la fourniture d'un premier noyau de rotor (13), avec un premier enroulement de rotor (14), la fourniture d'un premier noyau de stator (16) avec un premier enroulement de stator (17), la fourniture d'un dispositif d'excitation (18) pour fournir du courant au premier enroulement de rotor (14), la fourniture du dispositif d'excitation avec un second noyau de rotor (19) ayant un second enroulement de rotor multiphasé (20), connectant le second noyau de rotor (19) au premier noyau de rotor (13) par une relation de rotation fixe, la fourniture d'un second noyau de stator (21) avec un second enroulement de stator multiphasé (22), la connexion des premier et second enroulements de rotor (14, 20) l'un à l'autre, le dispositif d'excitation (18) définit une machine électrique asynchrone, **caractérisé par** la détermination des courants de rotor à travers le premier enroulement de rotor (14) sur la base des courants de stator à travers le second enroulement de stator (22) du dispositif d'excitation (18), la mesure de la vitesse du rotor (12), et la détermination des courants de rotor à travers le premier enroulement de rotor (14) à partir de la vitesse mesurée et d'un schéma de circuit équivalent du dispositif d'excitation (18).

**2.** Procédé selon la revendication 1, **caractérisé par** la connexion de toutes les phases des premier et second enroulements de rotor (14, 20) les unes aux autres par des conducteurs de connexion de phase (29).

**3.** Procédé selon la revendication 1, **caractérisé par** l'agencement des premier et second enroulements de rotor (14, 20) sur un arbre de rotor commun (12a).

**4.** Procédé selon la revendication 2 et 3, **caractérisé en ce que** les conducteurs de connexion de phase (29) courent à l'intérieur de l'arbre de rotor (12a).

**5.** Procédé selon la revendication 1, **caractérisé par** la fourniture du premier enroulement de rotor (14) comme un enroulement multiphasé et connexion des premier et second enroulements de rotor (14, 20) directement l'un à l'autre.

**6.** Procédé pour mettre en oeuvre une machine électrique selon l'une des revendications 1 à 5, **caractérisé par** l'utilisation d'un modèle de machine (24) du dispositif d'excitation (18) pour déterminer les courants de rotor à travers le premier enroulement de rotor (14).

**7.** Procédé selon la revendication 6, **caractérisé en ce que** la détermination des courants de rotor à travers le premier enroulement de rotor (14) est effectuée au moyen d'une commande en cascade à plusieurs étages, dans lequel la magnétisation et le couple de la machine sont commandés au moyen des courants de stator à travers le premier enroulement de stator (17), qui pour leur part sont commandés par les courants de rotor à travers le premier enroulement de rotor (14), qui à leur tour sont eux-mêmes commandés en appliquant les courants côté stator à travers le second enroulement de stator (22) du dispositif d'excitation (18).

**Fig.1**

Fig. 2

Fig. 3

**EP 2 704 310 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1289118 A1

- US 20070194572 A1